# EUROPÄISCHE PATENTANMELDUNG

(11) **EP 1 868 100 A2**
(43) Veröffentlichungstag der Anmeldung: **19.12.2007**
(21) Anmeldenummer: 06125981.8
(22) Anmeldetag: 13.12.2006
(51) Int. Cl.: G06F 11/36

(54) **Verfahren zur Fehlerdiagnose**

(30) Priorität: 22.12.2005 DE 102005061386
(71) Anmelder: ROBERT BOSCH GMBH, 70442 Stuttgart (DE)
(72) Erfinder: Boer, Gerrit De, 31139, Hildesheim (DE); Hornburg, Bjoern, 31188, Holle (DE); Gauger, Maximilian, 71706, Markgroeningen (DE)

(57) **Zusammenfassung**

Die Erfindung betrifft ein Verfahren zur Durchführung einer Fehlerdiagnose in einer Einrichtung (40), die mehrere Softwarekomponenten (42, 44, 46) aufweist. Bei dem Verfahren wird eine Fehlermeldung zu einem in einer Softwarekomponente (42, 44, 46) aufgetretenen Fehler von dieser Softwarekomponente (42, 44, 46) direkt an ein Diagnosemodul (50) übermittelt.

## Beschreibung

Die Erfindung betrifft ein Verfahren zur Fehlerdiagnose, ein Diagnosemodul, eine Einrichtung, ein Computerprogramm und ein Computerprogrammprodukt.

### Stand der Technik

In einem technischen System, dessen Funktionalität zu einem nicht unerheblichen Teil mittels Software umgesetzt wird - einem sogenannten eingebetteten System - muss bzgl. erkannter Fehlerzustände zwischen einzelnen als Softwareebenen ausgebildeten Softwaremodulen innerhalb eines derartigen Systems eine Kommunikation erfolgen. Damit wird einem Benutzer oder Servicepersonal eine Information darüber gegeben, worauf eine Fehlfunktion zurückzuführen ist, so dass darauf geeignet reagiert werden kann.

In einem Autoradio mit CD-Abspielgerät ist bspw. denkbar, dass eine eingelegte CD zerkratzt ist und daher eine Wiedergabe nicht möglich ist. In diesem Fall muss ein CD-Treiber dem Softwaremodul, das den CD-Treiber ansteuert, mitteilen, dass er keine Daten von der CD lesen kann. Das ansteuernde Softwaremodul wiederum muss einem als Anwendung ausgebildeten Softwaremodul mitteilen, dass keine Daten gelesen werden können. Dieses Softwaremodul übermittelt dann bspw. eine Fehlermeldung an den Benutzer.

In der Regel sind derartige Softwaremodule als Softwareebenen ausgebildet. Demnach werden alle relevanten Daten von jeder Softwareebene in die sie aufrufende Softwareebene übergeben. Nach dem Aufruf einer Funktion aus einer untergeordneten Softwareebene muss der Erfolg oder Misserfolg des Aufrufs ausgewertet und auf alle möglichen Fehler entsprechend reagiert werden.

Diese Vorgehensweise bedeutet einen erheblichen Aufwand für Funktionsschnittstellen, da in jedem Aufruf und Rücksprung Daten übergeben werden müssen. Durch die enge Verzahnung von Aufrufen und Fehlerbehandlung findet keine klare Trennung zwischen der eigentlichen Funktionalität und der Fehlerbehandlung statt. Auch Mechanismen wie aspektorientierte Programmierung (AP) und Ausnahmebehandlung in C++ und Java (Exceptions) haben dieses Problem nur gemildert, aber nicht gelöst.

Der zu leistende Aufwand führt in der Praxis der Softwareentwicklung oft dazu, dass Rückgabewerte von Funktionen nicht ausgewertet werden und implizit ein erfolgreiches Ergebnis des Funktionsaufrufs angenommen wird.

Ein Umfang der Fehlerbehandlung ist zudem nur schwer an sich ändernde Erfordernisse anpassbar, da die Routinen der Fehlerbehandlung in einem gesamten Code verstreut sind. Eine Skalierung unter Berücksichtigung von Kundenforderungen ist zudem mit großem Aufwand verbunden.

Die Druckschrift EP 788 581 B1 betrifft ein Verfahren zur Steuerung einer Antriebseinheit eines Kraftfahrzeugs mit einem Rechenelement, das wenigstens zwei sich zumindest außerhalb eines Fehlerfalls gegenseitig nicht beeinflussende Programmebenen aufweist und mit einem Watch-Dog-Element verbunden ist. Dabei steuert die erste Programmebene durch Bildung einer Steuergröße eine Leistung der Steuereinheit, die zweite Programmebene überwacht die Bildung dieser Steuergröße. Das Watch-Dog-Element ist zu einer bedarfsweisen Einleitung einer Fehlerdiagnose ausgebildet. Eine dritte Programmebene des Rechenelements ist dazu ausgebildet, in einem Zusammenspiel mit dem Watch-Dog-Element eine korrekte Durchführung der Überwachung in der zweiten Ebene zu überprüfen.

Vor diesem Hintergrund wird ein Verfahren mit den Merkmalen des Patentanspruchs 1, ein Diagnosemodul mit den Merkmalen des Patentanspruchs 7, eine Einrichtung mit den Merkmalen des Patentanspruchs 9, ein Computerprogramm mit den Merkmalen des Patentanspruchs 10 und ein Computerprogrammprodukt mit den Merkmalen des Patentanspruchs 11 vorgestellt.

### Vorteile der Erfindung

Die Erfindung betrifft ein Verfahren zur Durchführung einer Fehlerdiagnose in einer Einrichtung, die mehrere Softwarekomponenten aufweist. Bei dem Verfahren wird eine Fehlermeldung zu einem in einer Softwarekomponente aufgetretenen Fehler von dieser Softwarekomponente direkt an ein Diagnosemodul übermittelt.

Weitere Ausgestaltungen dieses Verfahrens ergeben sich aus den abhängigen Patentansprüchen.

Die Erfindung betrifft auch ein Diagnosemodul zur Durchführung einer Fehlerdiagnose für eine Einrichtung, die mehrere Softwarekomponenten aufweist. Das Diagnosemodul ist dazu ausgebildet, eine Fehlermeldung zu einem in einer Softwarekomponente aufgetretenen Fehler von dieser Softwarekomponente direkt zu empfangen.

Mit diesem Diagnosemodul können sämtliche Schritte des erfindungsgemäßen Verfahrens durchgeführt werden.

Eine erfindungsgemäße Einrichtung weist mehrere Softwarekomponenten und ein erfindungsgemäßes Diagnosemodul auf.

Die Erfindung betrifft zudem ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere einer erfindungsgemäßen Einrichtung, ausgeführt wird.

Die Erfindung betrifft des weiteren ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere einer erfindungsgemäßen Einrichtung, ausgeführt wird.

Mit der vorliegenden Erfindung und insbesondere dem Verfahren ist eine sog. parallele Fehlerdiagnose für miteinander kommunizierende Softwarekomponenten bzw. Softwaremodule durchführbar. Dabei werden Fehlermeldungen nicht zwischen einzelnen Softwarekomponenten übermittelt oder ausgetauscht, sondern an das parallel zu allen Softwarekomponenten angeordnete Diagnosemodul, insbesondere einem parallel angeordneten internen Fehlerspeicher des Diagnosemoduls, kommuniziert und somit übermittelt. Hierzu weist jede Softwarekomponente typischerweise jeweils eine und das Diagnosemodul bzw. der interne Fehlerspeicher mindestens eine geeignete Schnittstellen auf. Das Diagnosemodul bzw. der interne Fehlerspeicher ist somit typischerweise mit jeder Softwarekomponente unmittelbar verbunden bzw. verlinkt. Eine Verwaltung der Fehlermeldungen und eine Erzeugung der Fehlerdiagnose aus diesen Fehlermeldungen wird in einer Ausgestaltung der Erfindung von dem Auswertemodul des Diagnosemoduls durchgeführt.

In möglicher Ausgestaltung können die Softwarekomponenten als hierarchisch gegliederte Softwareschichten ausgebildet sein. Demnach erfolgt eine Kommunikation zur Bereitstellung einer Funktionalität der Einrichtung gemäß einer Struktur der Softwareschichten zwischen einzelnen Softwareschichten üblicherweise vertikal. Auch in diesem Fall ist die Erfindung vorteilhaft einsetzbar, da das Diagnosemodul bzw. der interne Speicher parallel und in diesem Fall horizontal zu den als Softwareschichten ausgebildeten Softwarekomponenten angeordnet ist, so ist auch hier eine direkte, insbesondere horizontale, Übermittlung von Fehlermeldungen zwischen den Softwareschichten und dem Diagnosemodul möglich.

Eine Vermischung von Funktionalität und Fehlerbehandlung wird auf diese Weise so weit wie möglich vermieden. Ein Programmieraufwand wird verringert und die Fehlerdiagnose und somit eine Eigendiagnose, d.h. das Finden einer Ursache für Fehler, systematisiert.

Mit Hilfe der parallelen Fehlerdiagnose oder Diagnose für sog. eingebettete Einrichtungen bzw. eingebettete Systeme, deren Funktionalität üblicherweise durch Software realisiert wird, kann eine Vielzahl von Fehlermeldungen der Einrichtung oder des Systems systematisch erfasst werden. Dabei ist ein Aufwand für einen Entwickler, der für eine eigentliche Funktionalität der Einrichtung verantwortlich ist, minimal. Seine Aufgabe beschränkt sich auf eine Ausgabe von Fehlermeldungen von jeweils betroffenen Softwarekomponenten an das Diagnosemodul.

Somit wird der Entwickler entlastet und kann sich voll auf die für einen Endkunden sichtbaren Funktionalitäten der Einrichtung oder eines entsprechenden Geräts konzentrieren. Er wird von den Aufgaben der Fehlerbehandlung weitgehend entlastet.

Alle Fehlermeldungen, die während des Betriebs der eingebetteten Einrichtung entstehen, werden vorzugsweise in dem internen bzw. zentralen Fehlerspeicher des Diagnosemoduls gesammelt. Das Diagnosemodul und/oder zumindest der interne Fehlerspeicher können in der eingebetteten Einrichtung aber auch an anderer Stelle außerhalb der Einrichtung angeordnet sein. Die Aufgabe des Entwicklers beschränkt sich auf das Absetzen von Fehlermeldungen. Dadurch steigt nicht zuletzt die Motivation, Fehlermeldungen auch tatsächlich zu verarbeiten oder weiterzuleiten und Fehler nicht einfach zu ignorieren.

Soll die Ursache eines Fehlers gefunden werden - entweder durch eine Softwarekomponente, die z.B. eine Meldung an den Benutzer absetzen will, oder durch Wartungspersonal - kann die Suche nach der Ursache durch das eigene Auswertemodul des Diagnosemoduls durchgeführt werden. Insbesondere dieses Auswertemodul verwendet als Eingabe ein formales, insbesondere digital vorliegendes Modell der Einrichtung oder eines entsprechenden Systemmodells, in dem Abhängigkeiten zwischen einzelnen Fehlern dargestellt sind. Außerdem werden Einträge in dem zentralen Fehlerspeicher und somit abgespeicherte Fehlermeldungen benutzt. Ein für die Funktionalität der Softwarekomponenten verantwortlicher Funktionscode ist damit von einem für die Verwaltung der Fehler notwendigen Fehlerverwaltungscode vollständig entkoppelt. Die Fehlermeldungen können in einem einheitlichen Format ausgegeben werden, wobei dieses Format als Elemente mindestens die meldende Softwarekomponente einen Zeitstempel, eine Fehlernummer, eine Information über aufgerufene Schnittstellen bei der Übermittlung der Fehlermeldung sowie weitere Informationen beinhalten kann. Mit derartigen Informationen innerhalb der Fehlermeldung ist bspw. nachvollziehbar, von welcher Schnittstelle, insbesondere Softwareschnittstelle, die Fehlermeldung zu dem Diagnosemodul übermittelt wurde.

Somit kann eine saubere Trennung in einer Software-Architektur zwischen einer Endkundenfunktionalität und einem Fehlermanagement erreicht werden. Eine Erstellung einer Eigendiagnose-Funktionalität kann entsprechend den Kundenanforderungen verhältnismäßig schnell, auch auf der Basis von entsprechenden Modellierungs-Werkzeugen, geschehen. Da Zusammenhänge zwischen einzelnen möglichen Fehlern explizit an nur einer Stelle, insbesondere dem Modell der Einrichtung, zentral abgespeichert sind, können diese Zusammenhänge in Form eines Baums oder Fehlergraphen leicht visualisiert werden. Das erleichtert auch die manuelle Fehlersuche während einer Entwicklung der Einrichtung. Es erlaubt, die Fehlertoleranz der Einrichtung zu erhöhen und kann als Ausgangsbasis für eine FMEA (Failure Mode and Effects Analysis bzw. Fehlermöglichkeits- und Einflussanalyse) dienen. Eine Produktqualität kann somit gesteigert werden.

Durch die Separierung des Funktionscodes für die Funktionalität von dem Fehlerverwaltungscode sinkt die Komplexität der einzelnen Module, was eine Stabilität der Einrichtung und damit eines gesamten Systems erhöhen kann. Das Diagnosemodul kann darüber hinaus für andere Einrichtungen oder Systeme unverändert übernommen werden. Hierfür muss nur ein Modell der Einrichtung oder des Systems neu erzeugt werden, eine eigentliche Auswertungslogik ändert sich nicht.

Da in vielen Projekten durch die zunehmende Verwendung modellbasierter Entwicklungsverfahren auf der Basis von UML bereits Modelle für Einrichtungen oder Systeme existieren oder aktuell eingeführt werden, müssen diese Modelle nur noch mit den Fehlern und deren gegenseitigen Abhängigkeiten annotiert bzw. vermerkt oder kommentiert werden. Der Aufwand für die Fehler- oder Eigendiagnose ist damit äußerst gering.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung ein Beispiel zu einer herkömmlichen Weitergabe von Fehlermeldungen zwischen Softwareebenen in einer Vorrichtung.
- Figur 2: zeigt in schematischer Darstellung eine Ausführungsform einer Einrichtung mit einem Diagnosemodul.
- Figur 3: zeigt in schematischer Darstellung Details aus Figur 2.

Die Figuren werden zusammenhängend und übergreifend beschrieben, gleiche Bezugszeichen bezeichnen gleiche Komponenten.

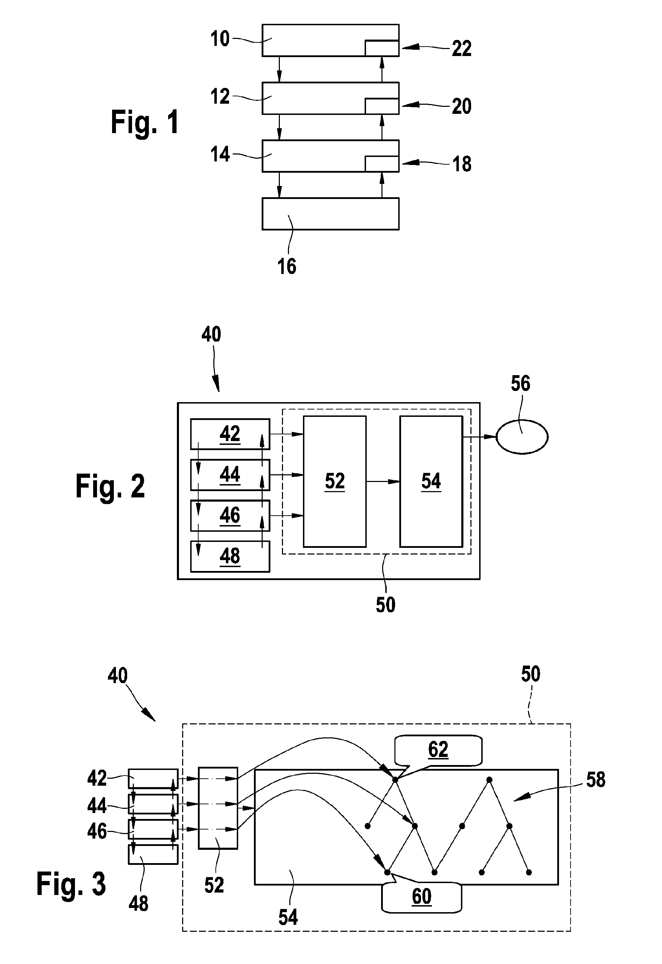

Figur 1 zeigt in schematischer Darstellung drei vertikal übereinander angeordnete Softwareebenen 10, 12, 14 sowie eine Hardwareebene 16 innerhalb einer Vorrichtung. Dabei ist eine erste Softwareebene 10 als Anwendungs- bzw. Applikationsebene, eine zweite Softwareebene 12 als sog. Middleware und eine dritte Softwareebene 14 als Treiber ausgebildet.

Zur Realisierung von Funktionen der Vorrichtung kommunizieren die Softwareebenen 10, 12, 14 und die Hardwareebene 16 gemäß der in Figur 1 gezeigten Anordnung streng hierarchisch untereinander. Dies wirkt sich auch auf eine Behandlung von Fehlern aus. Ein in der Hardwareebene 16 aufgetretener Fehler wird an die dritte Softwareebene 14 weitergegeben, in dieser erfolgt eine erste Fehlerbehandlung 18, daraufhin erfolgt eine Weiterleitung relevanter Daten in die zweite Softwareebene 12, in der eine zweite Fehlerbehandlung 20 durchgeführt wird, danach wird in der ersten Softwareebene 10 eine dritte, abschließende Fehlerbehandlung 22 durchgeführt und nachfolgend einem Nutzer der Vorrichtung eine Meldung bereitgestellt.

Aufgrund der strukturellen Wechselwirkung der vertikal angeordneten Softwareebenen 10, 12, 14 und der Hardwareebene 16 müssen mit einem Fehler verbundene Daten sämtliche Softwareebenen 10, 12, 14 nacheinander durchlaufen und darin jeweils bearbeitet werden. Somit findet keine klare Trennung zwischen einer eigentlichen Funktionalität und einer Fehlerbehandlung statt.

Figur 2 zeigt in schematischer Darstellung eine Einrichtung 40, die eine erste als Anwendungs- bzw. Applikationsebene ausgebildete Softwarekomponente 42, eine zweite als sog. Middleware, d. h. eine Verteilungsplattform oder ein Protokoll auf einer höheren Komponente, ausgebildete Softwarekomponente 44, eine dritte als Treiber ausgebildete Softwarekomponente 46 sowie eine Hardwarekomponente 48 aufweist. Des weiteren weist diese Einrichtung eine Ausführungsform eines Diagnosemoduls 50 auf, wobei das Diagnosemodul 50 einen internen Fehlerspeicher 52 und ein Auswertemodul 54 umfasst. Die vorgestellten Softwarekomponenten 40, 42, 44 können aufgrund einer hier gezeigten weitgehend hierarchischen Anordnung auch als vertikal übereinander angeordnete Softwareschichten aufgefasst werden.

Mit diesem Diagnosemodul 50 ist für die Softwarekomponenten 42, 44, 46 und somit auch für die Einrichtung 40 eine parallele Fehlerdiagnose durchführbar. Bei Auftreten eines Fehlers in einer der Softwarekomponenten 42, 44, 46, unabhängig davon in welcher der Softwarekomponenten 42, 44, 46, wird von der von dem Fehler betroffenen Softwarekomponente 42, 44, 46 eine Fehlermeldung an das Diagnosemodul 50 und an den internen Fehlerspeicher 52 direkt und parallel übermittelt. Die Fehlermeldungen werden in dem internen Fehlerspeicher 52 gespeichert und bedarfsweise an das Auswertemodul 54 weitergeleitet. In dem Auswertemodul 54 wird, wie in Figur 3 detaillierter dargestellt, eine Auswertung der Fehlermeldungen und somit die eigentliche Fehlerdiagnose durchgeführt.

Eine Meldung 56 zu der Fehlerdiagnose wird für eine weitere Bearbeitung oder Analyse von dem Auswertemodul 54 ausgegeben. Ein Fehler in der Hardwarekomponente 48 wird dem Diagnosemodul 50 über die in vorliegender Ausführungsform dritte unmittelbar mit der Hardwarekomponente 48 verbundene Softwarekomponente 46 gemeldet.

Durch die mit dem Diagnosemodul 50 durchführbare parallele Fehlerdiagnose ist eine klare Trennung zwischen einer eigentlichen Funktionalität, die durch die Softwarekomponenten 42, 44, 46 und die Hardwarekomponente 48 der Einrichtung 40 realisierbar ist, und einer Fehlerbehandlung, die durch das Diagnosemodul 50 durchführbar ist, möglich.

Figur 3 zeigt in schematischer Darstellung die bereits aus Figur 2 bekannte Einrichtung 40 mit den Softwarekomponenten 42, 44, 46 und der Hardwarekomponente 48 sowie das Diagnosemodul 50 mit dem internen Fehlerspeicher 52. Zur Verdeutlichung einzelner Schritte, die bei Durchführung der Fehlerdiagnose erfolgen, ist das Auswertemodul 54 in Figur 3 detaillierter dargestellt.

Zu jedem von der Software in den Softwarekomponenten 42, 44, 46 bemerkten Fehler wird dem Diagnosemodul 50 die Fehlermeldung oder ein entsprechender Fehlercode übermittelt. Fehlermeldungen werden in einem einheitlichen Format ausgegeben, wobei dieses Format als Elemente mindestens die meldende Softwarekomponente 42, 44, 46, einen Zeitstempel und eine Fehlernummer enthält. Die Einrichtung 40 schreibt bei Auftreten eines unerwarteten Verhaltens nur die Fehlermeldung oder den Fehlercode durch einen einfachen Funktions- bzw. Makroaufruf und kehrt dann in eine aufrufende Funktion zurück.

Der interne Fehlerspeicher 52 sammelt die von den einzelnen Softwarekomponenten 42, 44, 46 der Einrichtung 40 generierten Fehlercodes, ohne diese zu bewerten. Jede Softwarekomponente 42, 44, 46 der Einrichtung 40 darf gleichberechtigt in den internen Fehlerspeicher 52 des Diagnosemoduls 50 schreiben.

Ein in Figur 3 innerhalb des Auswertemoduls 54 dargestellter Fehlergraph 58 ist dazu vorgesehen, gegenseitige Abhängigkeiten von auftretenden Fehlern zu modellieren, dabei wird durch den Fehlergraph 58 ein Zusammenhang eines Modells der Einrichtung 40 und somit der Softwareebenen 42, 44, 46, in dem Abhängigkeiten zwischen einzelnen Fehlern dargestellt sind, dargestellt. Der Fehlergraph 58 dient dazu, aus einem auf einer der oberen Softwarekomponenten 42, 44, 46 aufgetretenen Problem und den zuvor geschriebenen Fehlermeldungen aus anderen Softwarekomponenten 42, 44, 46 eine oder mehrere mögliche Ursachen 60 für den Fehler zu erkennen. Dabei stehen Knoten und Blätter des Fehlergraphen 58 für Fehlercodes, die in den einzelnen Softwarekomponenten 42, 44, 46 generiert werden, während Kanten Abhängigkeiten der Fehler voneinander modellieren. Und-Verknüpfungen, bei denen nur ein gemeinsames Auftreten mehrerer ursprünglicher Fehler einen einzelnen Fehler auf höheren Schichten auslösen können, werden mit entsprechenden Pseudo-Knoten realisiert. Der Fehlergraph 58 wird aus einem Modell der Einrichtung 40 und/oder der Softwarekomponenten 42, 44, 46 heraus automatisiert erzeugt.

Zur Fehleranalyse mit dem Fehlergraph 58 gilt, dass ein Auftreten eines Fehlers auf einer unteren Softwarekomponente 42, 44, 46 durch das Auswertemodul 54 zunächst nur erfasst nicht aber ausgewertet wird. Nur Fehlercodes, die entsprechend gekennzeichnet sind - i. d. R. werden das für den Benutzer relevante Fehler sein - lösen eine Fehlersuche aus. Das Auswertemodul 54 traversiert bei der Auswertung den Fehlergraph 58 von unten, ausgehend von möglichen Ursachen 60, nach oben zu möglichen Auswirkungen 62 von Fehlern. Das Auswertemodul 54 beginnt dabei an jenem Knoten des Fehlergraphen 58, der für den auslösenden Fehlercode steht, markiert diesen und sucht und markiert dann benachbarte Knoten, für die ebenfalls Fehlercodes im internen Fehlerspeicher 52 hinterlegt sind. Dies wird rekursiv für alle derart gefundenen Knoten fortgesetzt.

Ein Algorithmus terminiert diesen Schritt innerhalb der Auswertung, wenn alle Knoten markiert wurden, die bei den gegebenen Einträgen des internen Fehlerspeichers 52 vom auslösenden Knoten erreichbar sind. Markierte Knoten ohne übergeordnete markierte Knoten, d.h. Fehler, für die keine per Fehlercode gemeldete Ursache 60 im baumartig ausgebildeten Fehlergraph 58 zu finden sind oder die keine übergeordneten Knoten besitzen, stellen dann die mindestens eine Ursache 60 eines jeweiligen Fehlers dar. Darauf kann das Auswertemodul 54 durch einen Eintrag im internen Fehlerspeicher 52, eine Meldung 56 (Figur 2) an den Benutzer, einen Neustart der Einrichtung 40 oder durch andere Maßnahmen geeignet reagieren. Auswirkungen 62 von Fehlern können zu Ursachen 60 rückverfolgt werden.

Eine Verwendung der Erfindung ist in jedem komplexen elektronischen Gerät möglich. Das kann besonders Multimedia-Geräte betreffen, die sich durch hohe Komplexität auszeichnen. Eine Anwendung ist auch bei allen elektronischen Steuergeräten, insbesondere in Fahrzeugen, denkbar.

## Patentansprüche

1. Verfahren zur Durchführung einer Fehlerdiagnose in einer Einrichtung (40), die mehrere Softwarekomponenten (42, 44, 46) aufweist, bei dem eine Fehlermeldung zu einem in einer Softwarekomponente (42, 44, 46) aufgetretenen Fehler von dieser Softwarekomponente (42, 44, 46) direkt an ein Diagnosemodul (50) übermittelt wird.

2. Verfahren nach Anspruch 1, bei dem Fehlermeldungen in einem Fehlerspeicher (52) des Diagnosemoduls (50) gespeichert und in einem Auswertemodul (54) des Diagnosemoduls (50) ausgewertet werden.

3. Verfahren nach Anspruch 1 oder 2, bei dem eine Funktionalität der Softwarekomponenten (42, 44, 46) von der von dem Diagnosemodul (50) durchgeführten Fehlerdiagnose getrennt wird.

4. Verfahren nach einem der voranstehenden Ansprüche, bei dem zum Finden einer Ursache (60) des Fehlers ein Modell der Einrichtung (40), in dem Abhängigkeiten von einzelnen Fehlern dargestellt sind, und abgespeicherte Fehlermeldungen verwendet werden.

5. Verfahren nach einem der voranstehenden Ansprüche, bei dem Zusammenhänge zwischen den Fehlern und den Softwarekomponenten (42, 44, 46) der Einrichtung (40) in einem Fehlergraph (58) visualisiert werden.

6. Verfahren nach Anspruch 5, bei dem eine Auswertung der Fehler mit dem Fehlergraph (58) durchgeführt wird.

7. Diagnosemodul zur Durchführung einer Fehlerdiagnose für eine Einrichtung (40), die mehrere Softwarekomponenten (42, 44, 46) aufweist, wobei das Diagnosemodul (50) dazu ausgebildet ist, eine Fehlermeldung zu einem in einer Softwarekomponente (42, 44, 46) aufgetretenen Fehler von dieser Softwarekomponente (42, 44, 46) direkt zu empfangen.

8. Diagnosemodul nach Anspruch 6, das einen Fehlerspeicher (52) zum Speichern der empfangenen Fehlermeldungen und ein Auswertemodul (54) zur Auswertung der Fehlermeldungen aufweist.

9. Einrichtung, die mehrere Softwarekomponenten (42, 44, 46) und ein Diagnosemodul (50) nach Anspruch 7 oder 8 aufweist.

10. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung (40) nach Anspruch 9, ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung (40) nach Anspruch 9, ausgeführt wird.
